# EUROPÄISCHE PATENTANMELDUNG

(11) **EP 2 369 354 A2**
(43) Veröffentlichungstag der Anmeldung: **28.09.2011**
(21) Anmeldenummer: 11000297.9
(22) Anmeldetag: 15.01.2011
(51) Int. Cl.: G01R 31/26

(54) **Verfahren und Vorrichtung zum Auffinden leistungsschwacher PV-Module in einer PV-Anlage**

(30) Priorität: 24.02.2010 DE 102010009080
(71) Anmelder: Adensis GmbH, 01129 Dresden (DE)
(72) Erfinder: Beck, Bernhard, 97332 Volkach OT Dimbach (DE)

(57) **Zusammenfassung**

Es wird ein Verfahren und eine Vorrichtung zur Durchführung des Verfahrens vorgeschlagen, um bei der Hilfe nach defekten Photovoltaikmodulen (M) behilflich zu sein. Bei einer mehrere, elektrisch parallel geschaltete PV-Einheiten (S,F) umfassenden Photovoltaikanlage ist jeder PV-Einheit ein eigener stationärer Stromsensor (N₁ bis N₈) zugeordnet. Weiterhin lässt sich jede PV-Einheit mittels einer Schaltvorrichtung (T₁ bis T₈) aus der Parallelschaltung herausnehmen.

## Beschreibung

Die Erfindung bezieht sich auf ein Verfahren zum Auffinden eines Strangs mit einem leistungsschwachen PV-Modul innerhalb einer größeren PV-Anlage und auf eine zugeordnete Vorrichtung zur Durchführung des Verfahrens.

Große PV-Anlagen können Tausende von PV-Modulen umfassen, die einzeln ausgemessen werden müssen, um ein schadhaftes Modul zu erkennen und zu lokalisieren. Dieser Aufwand ist notwendig, da das Vorhandensein eines einzigen oder auch mehrerer leistungsschwacher, wenn nicht sogar defekter Module bei der Gesamtleistung nicht weiter auffällt. Ein defektes Modul, bei dem eine Photovoltaikzelle nichtleitend ist oder bei dem die Lötverbindung zwischen zwei Zellen unterbrochen ist, führt zu einem Ausfall des gesamten Stranges von z.B. zehn in Serie geschalteten PV-Modulen, da eine einzige Unterbrechung auch die Serienverbindung unterbricht. Bei einer Gesamtleistung von 2 MW der Photovoltaikanlage entspricht der Beitrag eines Strangs von z.B. 2 KW einem Tausendstel der Leistung. Selbst mehrere über die Zeit defekte oder leistungsschwache Stränge fallen nicht sofort auf, da die Abweichung in der generierten Leistung auch Wetter bedingt sein kann und die Messgenauigkeit der verwendeten Stromwandler nicht hinreichend genau ist, um selbst bei konstantem Wetter so geringe Abweichungen zu erkennen. Permanent installierte Systeme zur Leistungsmessung sind mit einem nicht vertretbaren Kostenaufwand verbunden.

Neben obigem Problem der nicht entdeckten Minderleistungsfähigkeit der PV-Anlage ist es insbesondere im Garantiezeitraum wichtig, dass gerechtfertigte Reklamationsmöglichkeiten erkannt werden, um den Hersteller des defekten PV-Moduls in die Pflicht zu nehmen.

Mit dem heutigen Stand der Technik sind verschiedene Möglichkeiten der Überprüfung der Leistungsfähigkeit von PV-Modulen bekannt. Bei allen Verfahren, welche ein aussagekräftiges Ergebnis liefern, muss die PV-Anlage vom Wechselrichter entkoppelt und an ein Messgerät angeschlossen werden.

Als Messgerät kommen hierbei Multimeter zum Einsatz, in dem diese den Kurzschlussstrom und die Leerlaufspannung eines PV-Moduls, eines Strangs mit mehreren, seriell hintereinander angeordneten PV-Modulen oder einer PV-Einheit bestimmen. Ziel dieser Messung ist es, die grundsätzliche Funktion des PV-Moduls, Stranges bzw. der PV-Einheit zu erkennen.

Soll die Leistungsfähigkeit eines PV-Moduls, Stranges oder einer PV-Einheit ermittelt werden, so geschieht dies vorzugsweise durch das Anschließen eines U-I-Kennlinienmessgerätes, welches die entsprechende U-I-Kennlinie messen kann. Die so gemessene Kennlinie wird ergänzt um den Messwert eines Einstrahlungssensors bzw. einer Referenzsolarzelle sowie des Messwertes eines Temperaturfühlers, welcher die Temperatur des PV-Moduls misst. Der STC - Leistungswert (Standardisierter Leistungswert für Photovoltaikmodule) errechnet sich aus den oben genannten Werten -Einstrahlung, Temperatur, Spannung und Strom - zusammen. Dieser hat jedoch aufgrund der vielen Toleranzen bei den Sensoren, welche zur Berechnung herangezogen werden, eine hohe Ungenauigkeit.

Weiterhin ist aus dem Stand der Technik das Messen mit einer Stromzange bekannt, da man mit dieser im laufenden Betrieb die Stromstärke eines PV-Moduls, Stranges oder einer PV-Einheit ermitteln kann. Da jedoch Spannung, Einstrahlung und Temperatur unbekannt sind, genügt diese Art der Messung lediglich der reinen Überprüfung der Funktionalität sowie der Überprüfung von Sicherungen. Alle zum Stand der Technik gehörenden Verfahren und Vorrichtungen haben hinsichtlich Genauigkeit, Zeitaufwand und Anwendbarkeit während des Betriebes keine ausreichend präzise Aussagekraft.

So liegt vorliegender Erfindung die Aufgabe zugrunde, einen defekten oder leistungsschwachen Strang, in welchem ein defektes bzw. leistungsschwaches PV-Modul sein muss, mit wenig technischem und zeitlichem Aufwand zu erkennen.

Diese Aufgabe wird bezüglich des Verfahrens mit folgenden Schritten gelöst:
i) der Gleichstrom durch eine der PV-Einheiten wird mittels des jeweiligen stationären Stromsensors gemessen,
ii) zeitgleich mit der Messung unter i) wird der Gleichstrom mit einem Referenzstrommessgerät erfasst,
iii) für jede PV-Einheit wird die Differenz zwischen dem vom Stromsensor gemessenen Stromwert und dem vom Referenzstrommessgerät gemessenen Stromwert bewertet,
iv) die bewertete Differenz wird abgespeichert,
v) die Schritte i) bis iv) werden für alle parallel geschalteten PV-Einheiten wiederholt,
vi) die bewerteten Differenzen beliebiger zwei PV-Einheiten werden zueinander ins Verhältnis gesetzt, und
vii) die Verhältnisse werden zur Ermittelung der Leistungsfähigkeit der betreffenden PV-Einheiten einer Auswerteeinheit (7) zur Verfügung werden.

Die Bewertung der Differenz des vom Referenzstrommessgerät ermittelten Stromwertes und dem stationär ermittelten Stromwert kann im einfachsten Fall die Subtraktion der beiden gemessen Stromwerte sein, so dass lediglich die Abweichung des stationären Stromsensors erfasst wird. Ist die Differenz +3 Ampere im Vergleich zum Referenzstrommessgerät wird diese mit dem Faktor 1 bewertet und als +3 in den Speicher eingeschrieben. Bei der benachbarten PV-Einheit wird ein Unterschied zum Referenzstrommessgerät von -2 Ampere gemessen und entsprechend für diese PV-Einheit eine -2 in den Speicher eingeschrieben. Als anderes Kriterium kann z.B. bei unterschiedlich aufgebauten Feldern als PV-Einheit, der Unterschied in der Anzahl an PV-Modulen in den Feldern mit in die Bewertung einbezogen werden. Bei Verwendung von PV-Modulen verschiedener Hersteller kann der Bauart bedingte Effizienzunterschied mit in der Bewertung einfließen usw.

Für die stationären Stromsensoren ist es ausreichend, wenn kostengünstige Messgeräte geringer Genauigkeit eingesetzt werden. Durch die Referenzierung zum mit hoher Genauigkeit arbeitenden Referenzstrommessgerät wird die vorliegend gemessene Abweichung zum tatsächlich fließenden Strom kompensiert. Bei der vorliegend verwendeten Terminologie wird unter einer PV-Einheit sowohl ein einzelner Strang, als auch ein aus mehreren parallelen Strängen aufgebautes PV-Feld angesehen, wobei dann eine Vielzahl von PV-Feldern parallel geschaltet an einen gemeinsamen Wechselrichter angeschlossen sind. Bei den zur Zeit in der Diskussion stehenden Großanlagen von 100 MW oder mehr können auch komplette PV-Anlagen als PV-Einheit im vorliegenden Sinne verstanden werde, wenn mehrere dieser PV-Anlagen ein räumlich zusammenhängendes Gesamtsystem bilden.

Bei Durchführung des Verfahrens wird zunächst eine zeitgleiche Messung (zum Teil auch Feststellung, Ermittlung, oder dergleichen genannt) des Stroms durch eine der PV-Einheiten sowohl vom stationären Stromsensor, als auch vom Referenzstrommessgerät vorgenommen. Anschließend wird die zeitgleiche Messung für eine andere, z.B. die benachbarte PV-Einheit wiederholt. Wird der Strom durch das Referenzstrommessgerät zu einem Wert X, beispielsweise zu 100 Ampere, gemessen, können folgende Situationen auftreten: Der vom Stromsensor gemessene Strom ist ebenfalls X = 100 A, er ist kleiner als X, also z.B. 98 A oder er ist größer als X, z.B. 103 A. Dann wird in einem entsprechenden Bauteil die Differenz der beiden Ströme (der vom Stromsensor gemessene und der vom Referenzstrommessgerät gemessene) gebildet, eventuell um einen Bewertungsfaktor korrigiert, der PV-Einheiten spezifische Umstände berücksichtigt. Das Ergebnis ist dann eine Differenz von Null, bzw. -2% bei dem kleiner gemessenen Strom, bzw. +3% bei dem vom Stromsensor höher gemessenen Strom. Somit ist also das unterschiedliche Messergebnis des Stromsensors in Bezug zum Messergebnis des Referenzstrommessgerät bekannt. Diese Differenz kann auch als Unterverhältnis bezeichnet oder angegeben werden und wird dann bei obigem beispielhaften Fall in den Speicher als 1 bei gleich großem, als 0,98 bei dem kleineren oder als 1,03 bei dem größereren gemessenen Strom eingeschrieben.

Es soll angenommen werden, dass bei der ersten PV-Einheit ein Unterverhältnis von 1,15 gemessen wurde. Derselbe Durchlauf der Schritte erfolgt an einer beliebigen anderen, z.B. der benachbarten PV-Einheit und zeitigt beispielsweise das Unterverhältnis 1,12 als Ergebnis. An einer weiteren PV-Einheit, z.B. der zur zweiten PV-Einheit benachbarten, wird ein Unterverhältnis von 0,98 gemessen. Diese Messungen zum Referenzstrommessgerät werden durchgeführt, bis jede PV-Einheit zumindest einmal erfasst wurde. Die Ergebnisse werden jeweils abgespeichert. Betrachtet man aus Gründen der Übersichtlichkeit lediglich die drei obigen Messungen mit den Unterverhältnissen 1,15, 1,12 und 0,98 so weiß man, dass unabhängig von der Fertigungstoleranz der einzelnen Stromsensoren die den Unterverhältnissen zugeordneten PV-Einheiten in dem ermittelten Unterverhältnis in ihrer Performance voneinander abweichen. Diese Betrachtung wird zeitnah zu der Errichtung der Anlage angestellt, so dass das Leistungsvermögen der Anlage im Neuzustand erfasst wird.

Durch eine Multiplikation der Unterverhältnisse kann die Leistungsfähigkeit von zwei beliebigen Feldern als Produkt miteinander verknüpft werden. Am obigen Beispiel, arbeiten die erste und die zweite PV-Einheit in einem Unterverhältnis von 1,15 bzw. 1,12, was zu einem Produkt von 1,288 führt. Die erste und die dritte PV-Einheit arbeiten, verglichen zum Referenzstrommessgerät, in einem Unterverhältnis von 1,15 bzw. 0,98, was zu einem Produkt von 1,127 führt. Die zweite und die dritte PV-Einheit arbeiten in einem Unterverhältnis von 1,12 bzw. 0,98, was zu einem Produkt von 1,098 führt. Alternativ können die Unterverhältnisse auch zueinander ins Verhältnis gesetzt werden, was dann analog zu Verhältnissen von 1,027 (1,15/1,12), 11,173 (1,5/0,98) und 1,143 (1,12/0,98) führt.

Es müssen immer zumindest zwei PV-Einheiten miteinander verknüpft werden, es können aber auch mehr als zwei Unterverhältnisse miteinander verknüpft werden, indem z.B. die Unterverhältnisse aller drei PV-Einheiten miteinander multipliziert werden, was zu einem Produkt von 1,26 (1,15x1,12x0,98) bzw. zu einem Verhältnis von 1,048 (1,15/1,12/0,98) führt. Grundsätzlich können die Messwerte von zwei beliebigen PV-Einheiten miteinander verknüpft werden. Jedoch ist es sinnvoll, wenn die miteinander verknüpften PV-Einheiten räumlich zueinander benachbart sind. Dann ist die Wahrscheinlichkeit hoch, dass zum Messzeitpunkt analoge Verhältnisse herrschten, also gleiche Temperatur der Halbleiter im Modul, gleiche Einstrahlintensität der Sonne usw.

Durch einen Vergleich der Verhältnisse, Produkte oder sonstigen Verknüpfungen mit den entsprechenden Werten, welche aus Messwerte der Gleichströme durch die PV-Einheiten zu einem früheren Zeitpunkt als dem Zeitpunkt der aktuellen Messung oder Feststellung gebildet wurden, kann ermittelt werden, ob eine Veränderung der Leistungsfähigkeit in einer der PV-Einheiten oder in einer Gruppe von PV-Einheiten eingetreten ist.

Bei einer Anlage mit nicht-baugleichen PV-Einheiten liegt bisher die Schwierigkeit vor, dass kein direkter Vergleich unter den PV-Einheiten möglich ist. Dieser Nachteil wird durch vorliegendes Verfahren eliminiert, da durch die Referenzierung zum Referenzstrommessgerät sich die Unterschiede im Unterverhältnis wiederspiegeln. Hat zum Beispiel ein PV-Feld nur die Hälfte der PV-Stränge als ein anderes PV-Feld bei sonst identischen Umständen, würde ein Unterverhältnis nur halb so groß sein wie das andere Unterverhältnis. Dieses Verhältnis von 0,5 zueinander würde bei gleichmäßiger Alterung konstant bleiben, bei Auftreten eines Fehlers in einem der PV-Einheiten sich aber ändern, woraus der Rückschluss auf einen Fehler bei einer der PV-Einheiten gezogen werden kann. Hierbei wird davon ausgegangen, dass nicht zufälligerweise in jeder der PV-Einheiten ein die Leistungsfähigkeit gleich schwächender Fehler aufgetreten ist, die sich bei der Verhältnisbildung kompensieren würden. Wie bereits angedeutet wird zu einem späteren Zeitpunkt, zum Beispiel einige Monate vor Ablauf der Garantiefrist oder bei einer mangelnden Leistung der Anlage die Strommessung an den Stromsensoren der PV-Einheiten wiederholt. Wenn das Verhältnis, das Produkt oder die andere Verknüpfung noch gleich ist, kann mit einiger Wahrscheinlichkeit auf den korrekten Zustand der PV-Einheiten geschlossen werden, da ein gleich wirkender Mangel bei beiden PV-Einheiten eher unwahrscheinlich ist. Ist das Verhältnis hingegen abweichend, so muss in Abhängig der Richtung der Änderung die eine oder das andere verglichene PV-Einheit mangelhaft sein.

Zur Erzielung einer hohen Zuverlässigkeit der abgespeicherten Verhältnisse oder Produkte ist es sinnvoll, die Strommessung kurz (z.B. einige Millisekunden) hintereinander mehrere Male, z.B. fünf bis zehn Mal, vorzunehmen und das arithmetische Mittel über die kurz hintereinander vorgenommenen Strommessungen zu bilden. Das Verhältnis, das Produkt oder die sonstige Verknüpfung wird dann aus den arithmetischen Mitteln der Stromwerte gebildet und ist damit auf eine solidere Basis gestellt. Zusammen mit den Messwerten des Gleichstroms oder der Verhältnisse kann auch der, z.B. am Wechselrichter gemessene, Spannungswert zwischen den beiden Anschlussleitungen der PV-Einheit abgespeichert werden.

Da jede Messung auf das Referenzstrommessgerät bezogen wurde, liefert bei einer späteren Multiplikation der Unterverhältnisse oder bei der Verhältnisbildung der Unterverhältnisse zueinander der jeder PV-Einheit zugeordnete Stromsensor keinen eigenen Beitrag zur Messungenauigkeit. Auch andere Unwägbarkeiten, wie unterschiedliche Kontaktübergänge in der Anlagenverdrahtung, Abweichungen in der Energieumwandlungs-fähigkeit im PV-Modul, geringe Winkelabweichungen bei der Modulmontage etc. werden durch die Referenzierung als Charakteristikum für die spezielle PV-Einheit berücksichtigt und liefern daher keinen Beitrag, wenn es um die spätere Feststellung einer schadhaften PV-Einheit geht.

Das vorgestellte Verfahren ist nicht zur täglichen Anwendung vorgesehen, sondern eher zur Überprüfung der Leistungsfähigkeit der PV-Anlage in regelmäßigen Zeitabständen von z.B. einigen Monaten. Insofern ist es vertretbar, dass alle PV-Einheiten, die auf denselben Wechselrichter geschaltet sind, während aller Gleichstrommessungen auf eine konstante Spannung gehalten werden, indem der MPP (Maximal Power Point) - Regler des Wechselrichters auf den konstanten Spannungswert fixiert wird. Der für die Dauer der Messung auftretende Verlust über eine Fehlanpassung zum maximalen Leistungspunkt des Wechselrichters ist hinnehmbar.

Zur Beurteilung, inwieweit eine einzelne PV-Einheit gegebenenfalls von ihrer zu erwartenden Leistung abweicht, ist es zweckmäßiger Weise vorgesehen, dass eine einzige der PV-Einheiten mittels Strommessung, Spannungsmessung, Einstrahlungsintensität und direkter oder indirekter Temperaturmessung am Halbleiter als Referenz-PV-Einheit nach dem für Photovoltaikmodule zur Ermittlung der Normleistung festgelegten, standardisierten Testbedingungen (STC) ermittelt wird, um dann die Normleistung (nach STC) einer, mittels der Stromwertpaare verketteten PV-Einheit zu errechnen.

Insbesondere bei gleich aufgebauten PV-Einheiten kann eine solche Abschätzung zur individuellen Performance einer PV-Einheit auch durch Vergleich mit einer Referenz-PV-Einheit erfolgen, die zuvor als solche definiert wurde. Dies ist vorteilhafterweise diejenige PV-Einheit, die bei der erstmaligen Leistungsermittlung an einem Wetter bezogenen Idealtag, z.B. anlässlich der Inbetriebnahme der Photovoltaikanlage, die höchste Leistung erzeugt hat. Diese Leistung wird dann als bestmögliche Referenz für den verbauten Typ an PV-Einheit herangezogen. Weicht die Leistung einer anderen, beliebigen PV-Einheit von einem Grenzwert von z.B. 95% der Referenzeinheitsleistung nach unten ab, wird auf eine schadhafte Montage oder ein defektes Bauteil geschlossen.

Bezüglich der Vorrichtung wird die eingangs vorgebrachte Aufgabe durch eine mehrere, elektrisch parallel geschaltete PV-Einheiten (S,F) umfassende Photovoltaikanlage gelöst, wobei jeder PV-Einheit ein eigener stationärer Stromsensor zugeordnet ist, und jede PV-Einheit mittels einer Schaltvorrichtung aus der Parallelschaltung herausnehmbar ist. Die Erfindung basiert auf der separaten Zu- und Wegschaltbarkeit jeder beteiligten PV-Einheit zur Parallelschaltung und auf dem jeder PV-Einheit fest zugeordneten Strommesssensor.

Wie bereits ausgeführt werden in der Auswerteeinheit die zu einem Zeitpunkt t₀ abgespeicherten Verhältnisse oder Produkte mit den entsprechenden, zu einem späteren Zeitpunkt t₁ ermittelten Verhältnissen oder Produkten verglichen.

Referenzstrommessgerät ein Strommesswandler ist, der den Gesamtstrom durch alle parallel geschalteten PV-Einheiten misst. Das Referenzstrommessgerät kann fest eingebaut sein. Es vereinfacht den konstruktiven Aufbau, wenn die Strommesszange hoher Genauigkeit vor der Durchführung einer Messung um den Leiter gelegt wird, der auch den Stromsensor enthält.

Zu einem späteren Zeitpunkt nach der Verknüpfung (insbesondere der Verhältnis-oder der Produktbildung) gemäß Schritt vi) kann an einer der PV-Einheiten (S,F,A) der vorliegende Strom (I) gemessen werden und in einer Auswerteinheit (7) kann aus dem einen gemessenen Stromwert und den abgespeicherten Verknüpfungen, insbesondere den abgespeicherten Verhältnissen, der Gesamtstrom oder, unter Einbeziehung der jeweiligen Betriebsspannungswerte (U) der PV-Einheiten, die theoretische Gesamtleistung der Photovoltaikanlage bestimmt werden.

Um ein von anderen Faktoren möglichst unbeeinflusstes Ergebnis bei der zeitgleichen Gleichstrommessung durch das Referenzstrommess-gerät und dem Stromsensor zu erhalten, ist es vorgesehen, dass während des Schrittes i) kein Stromfluss durch andere PV-Einheiten erfolgt.
- Fig.1: mit der Detailansicht von Fig. 1a den prinzipiellen Aufbau eines größeren Photovoltaiksystems, und
- Fig.2: eine Mess- und Auswerteeinheit zum Einsatz in einer Anlage nach der Fig. 1.

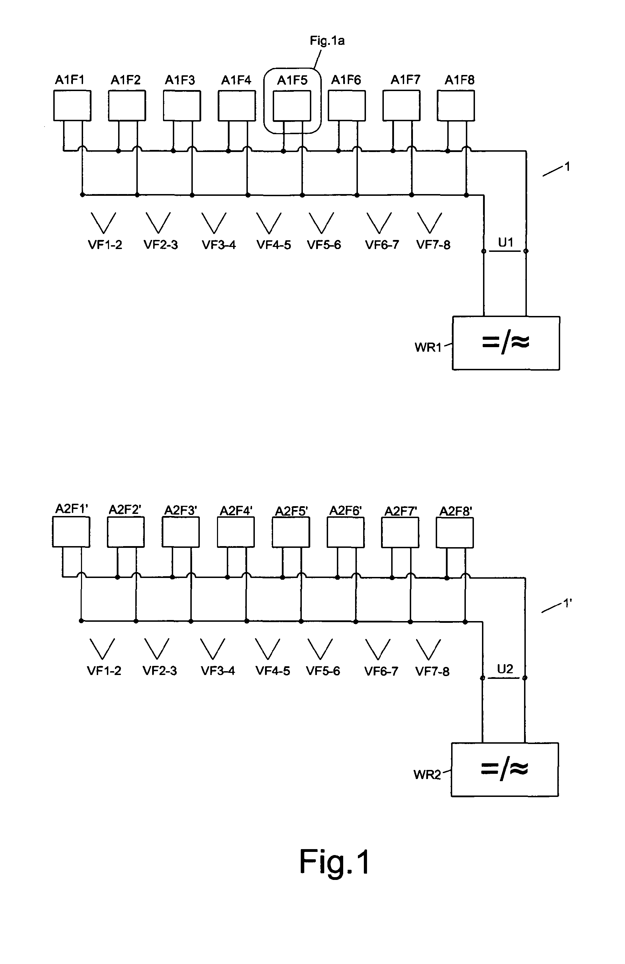

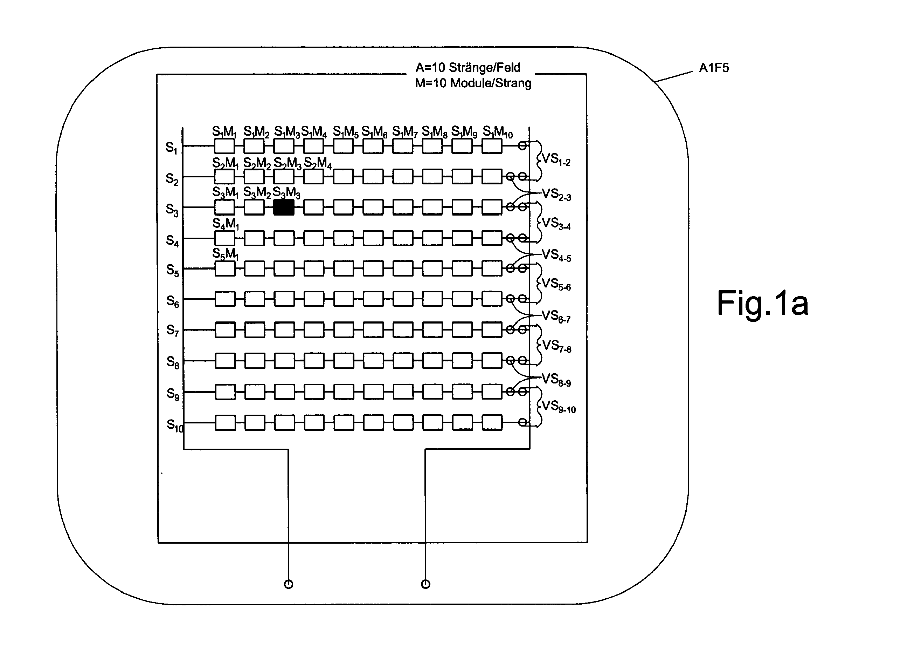

In der Figur 1 ist mit A₁ bzw. mit A₂ eine erste und eine zweite Photovoltaikanlage bezeichnet, die bautechnisch gleich ausgeführt sind. Das heißt, dass jede PV-Anlage 1,1' acht Felder F₁ bis F₈ bzw. F_{1'} bis F₈, besitzt, bei deren Bezeichnung noch das Präfix A₁ für Anlage 1 bzw. A₂ für Anlage 2 vorangestellt ist. Im Detail wird nur auf die erste Anlage A₁ eingegangen.

Die erste Anlage A₁ besitzt acht Felder A₁F₁, A₁F₂, ... bis A₁F₈ die wiederum alle gleich aufgebaut sind. Wie es am Beispiel des Feldes A₁F₅ (Anlage 1, fünftes Feld) in der Detailfigur 1a ersichtlich ist, besitzt jedes Anlagenfeld AF zehn elektrisch parallel geschaltete Stränge S, die mit S₁ bis S₁₀ durchnummeriert sind. Jeder Strang S₁ bis S₁₀ wiederum weist eine Reihenschaltung von 10 PV-Modulen M auf, die ihrerseits mit M₁ bis M₁₀ durchnummeriert sind. Ein einziges von den Einhundert PV-Modulen S₁M₁ bis S₁₀M₁₀ ist voll schwarz ausgelegt, nämlich das Photovoltaikmodul S₃M₃ im Feld F₃ von dem angenommen wird, dass es bei der Errichtung der Anlage fehlerfrei war und im Laufe der Zeit defekt geworden ist. Jedes Modul M besteht aus ca. 60 PV-Zellen, die in Reihe geschaltet sind. Die PV-Zelle ist die kleinste Einheit, in der die Sonnenstrahlen in Strom umgewandelt werden. Die 60 Zellen sind miteinander in Reihe geschaltet, so dass sich bei einer Arbeitsspannung von 1 Volt pro Zelle eine Spannung von 60 Volt über das Modul aufbaut. Bei zehn in Reihe geschalteten Modulen beträgt dann die Spannung über den gesamten Strang, auch als Strangspannung bezeichnet, 600 Volt. Wenn eine einzige der 10 mal 60 = 600 Zellen eines Strangs S nichtleitend wird, oder eine der Verbindungen zwischen den Zellen unterbrochen wird, fällt als Folge der Reihenschaltung der gesamte Strang S für die Stromlieferung aus. Beispielhaft ist ein solcher Fall bei dem Modul S₃M₃ unterstellt und es wird anschließend erläutert, wie der Strang S und später auch das Modul M identifiziert werden können.

Die zugrunde liegende Problematik ist deswegen von Bedeutung, da je nach Größe des PV-Systems, wie es im einleitenden Teil angesprochen ist, es nicht weiter auffällt, wenn ein einzelner Strang ausfällt, da sein Beitrag zur Gesamtleistung relativ gering ist. Andererseits verhält es sich wie bei einem tropfenden Wasserhahn, der nur geringe Mengen an Wasser verliert, sich diese geringe Mengen aber über die Zeit, im PV-Anlagenbau über mehrere Jahrzehnte zu einem bedeutenden Verlust addieren. So ist es aus wirtschaftlichen, wie auch aus in der Garantie begründeten Zwecken erforderlich, den Leistungszustand nicht nur der Gesamtanlage, sondern auch von einzelnen PV-Einheiten der Anlage beurteilen zu können.

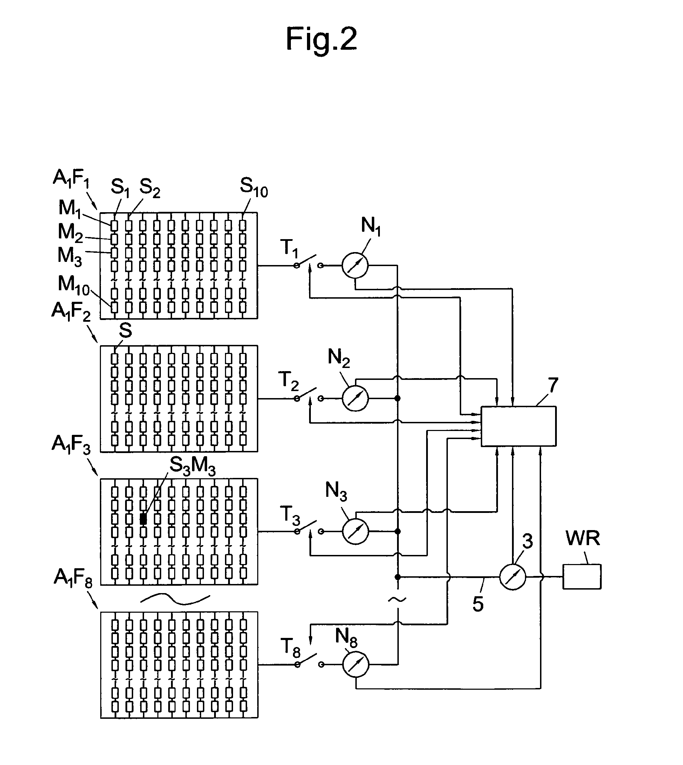

In der Figur 2 wird als PV-Einheit, in welcher eine Minderleistung untersucht werden soll, ein Feld F angesehen. In jedem der acht parallel geschalteten Felder F₁ bis F₈ der PV-Anlage 1 ist ein Trennschalter T₁ bis T₈ eingebaut, der es ermöglicht, das zugeordnete Feld F₁ bis F₈ aus der Parallelschaltung herauszunehmen und es wieder der Parallelschaltung zuzufügen. In Reihe zu jedem Trennschalter T₁ bis T₈ ist ein Stromsensor N₁ bis N₈ vorgesehen, mit dem der durch die Anschlussleitung des Feldes F fließende Gleichstrom I gemessen wird. Die Stromsensoren N brauchen keine Präzisionsinstrumente zu sein, da sie über ein Referenzstrommessgerät geeicht werden. Das Referenzstrommessgerät 3 ist ein sehr genau messendes Amperemeter, welches in die Einspeiseleitung 5 der PV-Anlage A₁ zum Wechselrichter WR fest eingebaut ist. Der feste Einbau ist keine Notwendigkeit. Stattdessen kann auch eine Strommesszange als Referenzstrommessgerät 3 verwendet werden, die bei jedem Messvorgang umgesetzt wird, um zeitgleich mit den Stromsensoren N₁ bis N₈ den durch die Stromsensoren N fließenden Strom I zu messen.

Die ermittelten Stromwerte werden einer Messwerterfassungs- und - auswerteeinheit 7 zugeführt, die die jeweils zeitgleich gemessenen Stromwerte der Stromsensoren N und des Referenzstrommessgerätes 3 miteinander vergleicht und gegebenenfalls bewertet. Der Vergleich kann vorzugsweise eine Verknüpfung des Stromwertepaares derart sein, dass der vom Stromsensor N gemessene Wert ins Verhältnis gesetzt wird zu dem vom Referenzstrommessgerät 3 gemessenen Wert. Das Ergebnis wird als bewertete Differenz oder auch Unterverhältnis bezeichnet, welches dem betrachteten Feld F fest zugeordnet ist. Es sagt aus, in welcher Höhe und in welche Richtung die Messung des Strommesssensors bei dem vorliegenden photovoltaisch erzeugten Gleichstrom bezogen auf das Messergebnis des Referenzstrommessgerätes abweicht. Die Abweichung berücksichtigt neben der Messtoleranz auch alle anderen für das betrachtete Feld spezifischen Parameter, wie die Länge der Anschlussleitungen, der Übergangswiderstand bei Leitungsverbindungen, die individuelle Performance der im Feld verwendeten PV-Module etc. Um bei dem im einleitenden Teil bereits andiskutiertem Beispiel zu bleiben, wird für das Feld F₁ eine bewertete Differenz oder ein Unterverhältnis von 1,15, für das Feld F₂ ein Unterverhältnis von 1,12 und für das Feld F₃ ein Unterverhältnis von 0,98 angenommen. Zusätzlich soll zur besseren Erläuterung noch als weitere PV-Einheiten die Felder F₄ und F₅ herangezogen werden, für welche ein Unterverhältnis oder eine bewertete Differenz von 1,10 bzw. von 0,90 als ermittelt angenommen wird. So wird nacheinander für jedes der Felder F das für das individuelle Feld F₁ bis F₈ vorliegende Unterverhältnis gebildet und in der Messwerterfassungs- und -auswerteeinheit 7 abgespeichert. Dieser Vorgang wird zu einem Zeitpunkt t₀, der vorzugsweise unmittelbar nach der Errichtung der PV-Anlage A₁ liegt, das erste mal durchgeführt.

Es ist vorteilhaft, wenn zum Zeitpunkt der Erfassung der Messwertpaare (ein Paar ist gleich der Strom I vom Stromsensor gemessen und I vom Referenzstrommessgerät gemessen) alle anderen nicht betroffenen PV-Einheiten aus der Parallelschaltung herausgenommen werden. Wird also das Stromwertepaar des Feldes F₃ ermittelt, sollten die Trennschalter T₁, T₂ und T₄ bis T₈ geöffnet sein. Die Steuerung der Trennschalter T erfolgt ebenfalls über die Messwerterfassungs- und -auswerteeinheit 7.

An dieser Stelle des Verfahrens sind in der Messwerterfassungs- und - auswerteeinheit 7 die bewerteten Differenzen, ggf. als Unterverhältnis, zu jedem Feld F zum Zeitpunkt t₀ abgelegt. Die Reihenfolge der ausgemessenen Felder F spielt dabei keine Rolle, wichtig ist die Zuordnung der Unterverhältnisse zu dem betroffenen Feld Fₓ in dem der Stromsensor Nₓ liegt, wobei aus den zuvor genannten Gründen bei der Reihenfolge die räumliche Nähe der Felder F zueinander berücksichtigt werden sollte.

In die Messwerterfassungs- und -auswerteeinheit 7 wird auch die Verknüpfung der bewerteten Differenzen, hier am Beispiel der Unterverhältnisse, vorgenommen. Die Verknüpfung ist im einfachsten Fall die Bildung des Produkts P oder des Verhältnisses V der bewerteten Differenzen miteinander bzw. zueinander. Nimmt man beispielsweise das Verhältnis V, so ergibt sich zum Zeitpunkt t₀ für die beiden Felder F₁ und F₂ ein Wert V(t₀)₁₋₂ von 1,15/1,12=1,027, für die Felder F₂ und F₃ ein Verhältnis V(t₀)₂₋₃ von 1,143 (1,12/0,98), für die Felder F₃ und F₄ ein Verhältnis von V(t₀) ₃₋₄ von 0,891 (0,98/1,10), und für die Felder F₄ und F₅ ein Verhältnis V(t₀) ₄₋₅ von 1,222 (1,10/0,90). Diese Werte werden in einen Speicher der Messwerterfassungs- und -auswerteeinheit 7 eingeschrieben, um sie zu einem späteren Zeitpunkt t₁, der z.B. einen Monat vor Ablauf der Garantiezeit liegt, mit dann aktuell ermittelten Verhältnissen V(t₁) zu vergleichen. Der Vorteil des Verfahrens ist, dass zu dem späteren Zeitpunkt t₁ nicht die identischen Wetterverhältnisse, Temperaturen etc. vorliegen müssen, da diese Einflüsse über die Referenzierung eliminiert werden.

Es wird angenommen, dass zu dem späteren Zeitpunkt alle Anlagenteile unverändert oder zumindest gleichmäßig gealtert sind, bis auf das Auftreten eines Defekts im Feld F₃ , dessen drittes Modul M₃ im Strang S₃ defekt ist. Dieser Fehler wäre an sich im Rahmen der Messungenauigkeit und im Rahmen der zulässigen Toleranzabweichungen und könnte mit den herkömmlichen Maßnahmen nicht entdeckt werden. Bei vorliegendem Verfahren liegt unter obiger Annahme, wenn zu dem Zeitpunkt t₁ eine Strommessung über die Stromsensoren N durchgeführt wird, folgender Sachverhalt vor. Die zu den PV-Einheiten F₁ bis F₅ mit Hilfe der Stromsensoren N₁ bis N₅ ermittelten Ströme verhalten sich bei der Verhältnisbildung für die Felder F₁ , F₂ , F₄ und F₅ unverändert, da dort kein Defekt vorliegt, also : 1,027 für das Verhältnis V(t₁)₁₋₂ und 1,222 für das Verhältnis V(t₁)₄₋₅. Bei dem Feld F₃ wird von dem Stromsensor N₃ ein geringerer Strom gemessen, da der Strang S₃ aufgrund des defekten Moduls M₃ komplett ausgefallen ist. Geht man von einer üblichen Stranganzahl von 10 Strängen S aus und neun ansonsten unverändert arbeitenden Strängen S, wird der vom Stromsensor N₃ gemessene Strom I um 10% kleiner sein. Da direkt die von den Stromsensoren N ermittelten Ströme ins Verhältnis gesetzt werden, ergibt sich ein Verhältnis V(t₁)₂₋₃ von 1,270 (1,143x0,9) anstelle des ursprünglichen Verhältnisses V(t₀)₂₋₃ von 1,143. Analog ergibt sich das Verhältnis V(t₁)₃₋₄ zu 0,98 (0,891x1,1) anstelle des ursprünglichen Verhältnisses V(t₀)₃₋₄ von 0,891. Auch hier gilt, dass die einzelnen Ströme I der Stromsensoren N am besten bei geöffnetem Trennschalter T der an der Messung nicht beteiligten, übrigen PV-Einheiten, in diesem Fall nicht beteiligter Felder F, gemessen werden. Aus einem Vergleich der zum Zeitpunkt t₁ ermittelten Verhältnisse V(t₁) von den über die Stromsensoren N gemessenen Ströme zueinander mit den bei der ursprünglichen Referenzierung ermittelten und bei intakter Anlage auch später zu erwartenden Verhältnisse V(t₀) können Rückschlüsse auf den Ort des Defekts und dessen Schwere gezogen werden.

Wie bereits an anderer Stelle angemerkt, kann die Bewertung der Differenz nach Schritt iii) durch eine Multiplikation mit dem Faktor 1 oder -1 erfolgen, was im Ergebnis eine Darstellung der absoluten Differenz zwischen dem vom Stromsensor und dem vom Referenzstrommessgerät gemessenem Wert entspricht. So z.B. kann die Differenz bei einem Feld F drei Ampere betragen und bei dem benachbarten oder einem beliebigen anderen Feld F 3,5 Ampere. Die Verknüpfung zu Daten könnte jetzt eine einfache Summenbildung, also 6,5 (Ampere) oder eine einfache Subtraktion, also -0,5 (Ampere) sein. Wird zu dem späteren Zeitpunkt t₁ die Messung wiederholt, und es ergibt sich eine Summe von lediglich 4 (Ampere) oder eine Differenz von -3 (Ampere), so weiß man bei der Summe, dass eine der beiden PV-Einheiten einen Defekt hat, der 2,5 (Ampere) Minderleistung bewirkt, sofern keine gleichmäßige Verschlechterung unterstellt wird. Bei der Differenz weiß man noch zusätzlich, welche der beiden PV-Einheiten, hier Felder F, den Defekt hat, je nachdem ob die Differenz -3 ergibt oder +2. Es sind weitere Bewertungsmaßstäbe denkbar, wobei jedoch die Verhältnisbildung als die effektivste angesehen wird.

Die Messung zur Kontrolle auf vorliegende Defekte kann bei entsprechend robusten Halbleiterschaltern regelmäßig jeden Tag erfolgen, da sie nur wenige Sekunden beansprucht. So wird ein sich kompensierendes Auftreten von Defekten an mehreren Modulen zum Zeitpunkt der Messung vermieden:
z.B. ist es unwahrscheinlich, dass jeweils ein Verbindungsbruch in einem PV-Modul, der zum Ausfall des Strangs S führt, am selben Tag bei genau den beiden benachbarten Feldern auftritt. Über einen Zeitraum von einem Jahr könnte dies durchaus möglich sein. Die Referenzierung der Verfahrensschritte i) bis v) berücksichtigt hingegen unterschiedliches Alterungsverhalten von PV-Modulen, Änderungen in der Präzision der Stromsensoren N, witterungsbedingte Kontaktierungsverschlechterungen etc. und braucht daher nur relativ selten vorgenommen zu werden.

### Bezugszeichenliste

- A: Photovoltaikanlage
- F: Photovoltaikfeld
- S: Photovoltaikstrang
- M: Photovoltaikmodul
- V: Verhältnis
- WR: Wechselrichter
- N: Stromsensor
- T: Trennschalter
- 1: Vorrichtung zur Durchführung des Verfahrens
- 3: Referenzstrommessgerät
- 5: Einspeiseleitung
- 7: Messwerterfassungs- und -auswerteeinheit

## Patentansprüche

1. Messverfahren zur Ermittlung eines Leistungsabfalls einer PV-Einheit (S,F) innerhalb einer mehrere, elektrisch parallel geschaltete PV-Einheiten (S,F) umfassenden Photovoltaikanlage, wobei jeder PV-Einheit ein eigener stationärer Stromsensor zugeordnet ist, und jede PV-Einheit mittels einer Schaltvorrichtung (T₁ bis T₈) aus der Parallelschaltung herausnehmbar ist, mit folgenden Schritten:
i) der Gleichstrom (I) durch eine der PV-Einheiten wird mittels des jeweiligen stationären Stromsensors (N₁ bis N₈) gemessen,
ii) zeitgleich mit der Messung unter i) wird der Gleichstrom mit einem Referenzstrommessgerät (3) erfasst,
iii) für die PV-Einheit wird die Differenz zwischen dem vom Stromsensor gemessenen Stromwert und dem vom Referenzstrommessgerät gemessenen Stromwert bewertet,
iv) die bewertete Differenz wird abgespeichert,
v) die Schritte i) bis iv) werden für jede der parallel geschalteten PV-Einheiten wiederholt,
vi) die bewerteten Differenzen beliebiger zwei PV-Einheiten werden miteinander zu Daten verknüpft, insbesondere zueinander ins Verhältnis (V) gesetzt, und
vii) die verknüpften Daten, insbesondere die Verhältnisse (V), werden zur Ermittlung der Leistungsfähigkeit der betreffenden PV-Einheiten einer Auswerteeinheit (7) zur Verfügung gestellt.

2. Messverfahren nach Anspruch 1, **dadurch gekennzeichnet, dass** die PV-Einheiten (S,F,A) während der Verfahrensschritte i) bis v) auf den gleichen Betriebsspannungswert (U) gesetzt werden.

3. Messverfahren nach einem der Ansprüche 1 oder 2, **dadurch gekennzeichnet, dass** die Auswerteeinheit die zu einem Zeitpunkt t₀ abgespeicherten Verhältnisse mit den entsprechenden, zu einem späteren Zeitpunkt t₁ ermittelten Verhältnissen vergleicht.

4. Messverfahren nach einem der Ansprüche 1 bis 3, **dadurch gekennzeichnet, dass** das Referenzstrommessgerät ein Strommesswandler ist, der den Gesamtstrom durch alle parallel geschalteten PV-Einheiten misst.

5. Messverfahren nach einem der Ansprüche 1 bis 4, **dadurch gekennzeichnet, dass** die Differenzen benachbarter PV-Einheiten zueinander ins Verhältnis gesetzt werden.

6. Verfahren nach einem der Ansprüche 1 bis 5, **dadurch gekennzeichnet, dass** zu einem späteren Zeitpunkt nach der Verhältnisbildung gemäß Schritt vi) an einer der PV-Einheiten (S,F,A) der vorliegende Strom (I) gemessen wird und dass in einer Auswerteinheit (7) aus dem vorliegenden Stromwert und den Verhältnissen der Gesamtstrom oder, unter Einbeziehung der jeweiligen Betriebsspannungswerte (U) der PV-Einheiten, die theoretische Gesamtleistung der Photovoltaikanlage bestimmt wird.

7. Verfahren nach einem der Ansprüche 1 bis 6, **dadurch gekennzeichnet, dass** in Schritt vi) alle PV-Einheiten zumindest einmal zur Verhältnisbildung beigetragen haben.

8. Verfahren nach einem der Ansprüche 1 bis 7, **dadurch gekennzeichnet, dass** die abgespeicherten Verhältnisse aus dem arithmetischen Mittel einer Vielzahl von kurz hintereinander vorgenommenen Strommessungen gebildet werden.

9. Verfahren nach einem der Ansprüche 1 bis 8, **dadurch gekennzeichnet, dass** während des Schrittes i) kein Stromfluss durch andere PV-Einheiten erfolgt.

10. Vorrichtung zur Durchführung des Verfahrens nach einem der Ansprüche 1 bis 8, **gekennzeichnet durch** eine mehrere, elektrisch parallel geschaltete PV-Einheiten (S,F) umfassende Photovoltaikanlage, wobei jeder PV-Einheit ein eigener stationärer Stromsensor (N₁ bis N₈) zugeordnet ist, und jede PV-Einheit mittels einer Schaltvorrichtung (T₁ bis T₈) aus der Parallelschaltung herausnehmbar ist.
